Europäisches Patentamt

European Patent Office

Office européen des brevets

(11) Numéro de publication : **0 291 463 B1**

# FASCICULE DE BREVET EUROPEEN

(45) Date de publication du fascicule du brevet :
**11.09.91 Bulletin 91/37**

(51) Int. Cl.⁵ : **B65G 47/28, B65G 47/32, B65B 35/40, A23G 7/00**

(21) Numéro de dépôt : **88810310.8**

(22) Date de dépôt : **11.05.88**

(54) Dispositif pour aligner des produits ou des rangées de produits.

(30) Priorité : **12.05.87 FR 8706759**

(43) Date de publication de la demande :
**17.11.88 Bulletin 88/46**

(45) Mention de la délivrance du brevet :
**11.09.91 Bulletin 91/37**

(84) Etats contractants désignés :
**CH DE FR GB IT LI**

(56) Documents cités :
**FR-A- 2 240 876
GB-A- 2 003 441
GB-A- 2 069 958**

(73) Titulaire : **SAPAL, Société Anonyme des Plieuses Automatiques
44, Av. du Tir Fédéral
CH-1024 Ecublens (CH)**

(72) Inventeur : **Chenevard, Alexis
Résidence de la Côte 20
CH-1110 Morges (CH)**
Inventeur : **Pilar, Hans
Avenue C.-F. Ramuz 39
CH-1009 Pully (CH)**

(74) Mandataire : **Nithardt, Roland
Cabinet Roland Nithardt Conseils en Propriété
Industrielle S.A. Y-Parc Scientifique et
Technologique Chemin de la Sallaz Case
postale 3347
CH-1400 Yverdon-les-Bains (CH)**

EP 0 291 463 B1

## Description

La présente invention concerne un dispositif pour aligner des produits ou des rangées de produits amenés irrégulièrement sur un ruban transporteur d'une ligne de conditionnement ou similaire, ce dispositif comportant des moyens de détection pour détecter le passage de la queue d'un produit ou d'une rangée de produits, des moyens d'alignement et des moyens d'actionnement de ces moyens d'alignement, dans lequel lesdits moyens de détection sont agencés pour transmettre auxdits moyens d'actionnement un signal de détection lorsqu'ils détectent le passage de la queue du produit ou de la rangée de produits, et dans lequel lesdits moyens d'actionnement sont agencés pour déplacer les moyens d'alignement d'une position d'attente située en dehors de la trajectoire suivie par le produit ou la rangée de produits sur le ruban transporteur, dans une position active en appui contre la queue du produit ou de la rangée de produits, puis pour déplacer les moyens d'alignement dans la direction du ruban transporteur à une vitesse constante supérieure à celle de ce ruban, de manière à pousser le produit ou la rangée de produits déposés sur ce ruban sur une distance déterminée, puis pour ramener les moyens de déplacement dans leur position initiale d'attente.

Un tel dispositif est connu par le document FR-A-2240876.

Les produits ou les rangées de produits, tels que par exemple des tablettes de chocolat ou d'autres produits, alimentaires ou non, fabriqués par des machines de production telles que par exemple des mouleuses, des enrobeuses, des extrudeuses, des fours de cuisson etc. sont généralement transportés vers des unités de conditionnement sur des rubans transporteurs. Lors de la production, par exemple au moyen d'une de ces machines, ou au cours du transport, ces produits peuvent subir des perturbations qui les désalignent ou qui font que leur pas sur le ruban transporteur n'est pas constant. Or, le bon fonctionnement d'une machine d'emballage exige l'approvisionnement régulier de produits, ce qui implique que ces produits doivent être mis au pas et alignés. En d'autres termes, lorsqu'il s'agit de rangées de produits, il est indispensable que les produits d'une même rangée soient alignés.

De nombreuses techniques d'alignement et de mise au pas ont déjà été proposées. Jusqu'à des cadences de 100 rangées/minute on peut envisager de retenir les produits en les arrêtant momentanément au moyen de butées alors que le ruban transporteur continue à se déplacer. Une autre technique couramment utilisée consiste à positionner les produits sur une chaîne à taquets qui amène les produits en butée contre les taquets montés sur la chaîne à égale distance les uns des autres. Ces mécanismes relativement lourds ne se prêtent pas au traitement de tous les types de produits et ne peuvent pas être utilisés pour des cadences très élevées de l'ordre de 200 à 250 rangées/minute.

Il faut bien comprendre que des produits fabriqués à ces cadences doivent impérativement être repris par la ligne de conditionnement, pour éviter les déchets, car les machines de production ne peuvent pas être arrêtées en cours de production.

Il est donc impératif de disposer de techniques d'alignement des produits fiables à des cadences très élevées et susceptibles d'être utilisées pour des produits relativement délicats et fragiles.

Le dispositif d'alignement décrit par la demande française FR-A-2240876 comporte plusieurs organes d'alignement montés sur une chaîne sans fin. Les organes d'alignement agissent alternativement sur les produits ou rangées de produits à aligner. Ce dispositif manque de souplesse du fait que les organes sont couplés, le mouvement de retour étant similaire, mais inversé par rapport au mouvement direct.

La présente invention se propose de pallier les faiblesses des systèmes connus et de trouver une solution aux problèmes de l'alignement des produits ou des rangées de produits sur un ruban transporteur.

Dans ce but, le dispositif selon l'invention est caractérisé en ce que les moyens de détection sont constitués par un détecteur unique et les moyens d'alignement par un organe d'alignement unique et en ce que le retour à la position initiale de cet organe d'alignement est effectué à une vitesse sensiblement constante sur au moins la première partie de sa trajectoire.

Selon une autre forme de réalisation, le retour de l'organe d'alignement à la position initiale est effectué, sur la seconde partie de sa trajectoire, à une vitesse variable.

Cette vitesse variable est de préférence déterminée de telle manière que l'organe d'alignement passe par une position où sa vitesse est nulle entre deux cycles de travail, mais elle peut également être déterminée de telle manière que l'organe d'alignement ne passe pas par un point d'arrêt entre deux cycles de travail.

Lorsque l'organe d'alignement passe par une position où sa vitesse est nulle, les moyens d'actionnement peuvent être agencés pour le déplacer selon le cycle de fonctionnement suivant : une première phase d'accélération au cours de laquelle l'organe d'alignement est déplacé de sa position d'attente à vitesse nulle dans une position de contact avec la queue du produit ou de la rangée de produits, sa vitesse étant supérieure à la vitesse de transport linéaire du produit ou de la rangée de produits sur le ruban transporteur, une deuxième phase à vitesse constante, où l'organe d'alignement est déplacé parallèlement au ruban transporteur, à une vitesse supérieure à celle de ce ruban et où cet organe reste en appui contre la queue du produit ou de la rangée de produits en le poussant par rapport au ruban transporteur, une troisième phase d'accélération, dans laquelle l'organe d'alignement est soulevé pour ne plus être en contact avec le produit ou la rangée de produits, une quatrième phase de déplacement à vitesse constante au cours de laquelle l'organe d'alignement est déplacé, sur une partie de sa trajectoire, à vitesse constante, dans une direction opposée à la direction de déplacement du ruban transporteur, et une cinquième phase de décélération, au cours de laquelle l'organe d'alignement est ramené à une vitesse décroissant jusqu'à zéro, dans sa position d'attente.

Lorsque l'organe d'alignement ne passe pas par un point d'arrêt, les moyens d'actionnement peuvent être agencés pour le déplacer selon le cycle de fonctionnement suivant : une première phase d'accélération au cours de laquelle l'organe d'alignement est déplacé de sa position d'attente à vitesse nulle dans une position de contact avec la queue du produit ou de la rangée de produits, sa vitesse étant supérieure à la vitesse de transport linéaire du produit ou de la rangée de produits sur le ruban transporteur, une deuxième phase à vitesse constante, où l'organe d'alignement est déplacé parallèlement au ruban transporteur, à une vitesse supérieure à celle de ce ruban et où cet organe reste en appui contre la queue du produit ou de la rangée de produits en le poussant par rapport au ruban transporteur, une troisième phase d'accélération, dans laquelle l'organe d'alignement est soulevé pour ne plus être en contact avec le produit ou la rangée de produits, une quatrième phase de déplacement à vitesse constante au cours de laquelle l'organe d'alignement est déplacé, sur une partie de sa trajectoire, à vitesse constante, dans une direction opposée à la direction de déplacement du ruban transporteur, et une cinquième phase de décélération, au cours de laquelle l'organe d'alignement est ramené à une vitesse décroissant jusqu'à la valeur de la vitesse constante de la deuxième phase, dans sa positon du début de ladite deuxième phase.

La présente invention sera mieux comprise en référence à la description d'un exemple de réalisation et du dessin annexé dans lequel :

la fig. 1 représente un graphique illustrant un premier mode de fonctionnement du dispositif selon l'invention,

la fig. 2 représente un graphique illustrant un second mode de fonctionnement du dispositif selon l'invention,

la fig. 3 représente une vue en élévation d'une forme de réalisation particulière du dispositif selon l'invention, et

la fig. 4 représente une vue de dessus du dispositif illustré par la fig. 4.

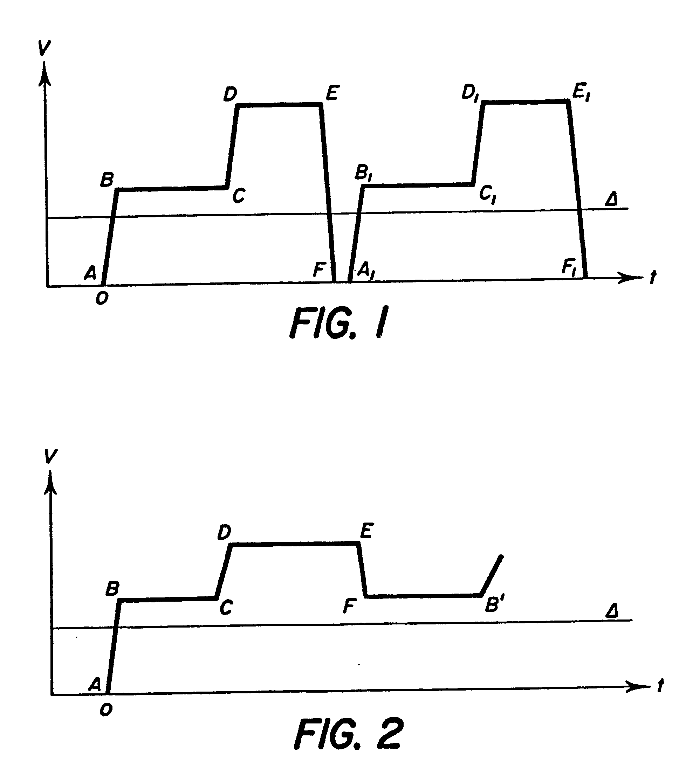

Le graphique de la fig. 1 représente deux cycles complets de fonctionnement d'un organe d'alignement. Le temps est représenté en abscisses et les vitesses en ordonnées. Le point A du graphique qui constitue l'origine du cycle correspond au moment où un détecteur, tel que par exemple une cellule photoélectrique, détecte le passage de la queue d'un produit ou d'une rangée de produits. Le segment AB correspond à l'accélération donnée à l'organe d'alignement pour qu'il rattrape cette queue de produits. Le segment BC correspond au déplacement à vitesse constante de l'organe d'alignement, vitesse qui est supérieure à la vitesse de déplacement du ruban transporteur qui est représentée par la droite parallèle à l'axe des abscisses. Pendant sa phase de déplacement à vitesse constante, l'organe d'alignement pousse le produit, les produits d'une rangée ou au moins une partie de ces produits qui avaient du retard sur certains autres de la même rangée, à une vitesse supérieure à celle du ruban transporteur, ce qui permet de les aligner et de les mettre au pas. Le point C correspond au point du cycle où ces produits sont effectivement alignés et où l'organe d'alignement est retiré pour qu'il cesse de pousser les produits. Le segment CD correspond à une accélération de cet organe d'alignement, le segment DE, parallèle à l'axe des abscisses, correspond à la première phase du retour de l'organe d'alignement dans sa position initiale. Cette première phase s'effectue à vitesse constante. Le segment EF correspond à la seconde phase de retour de l'organe d'alignement dans sa position initiale. Il s'agit d'une phase de décélération. Dans la pratique, l'organe d'alignement est amené dans l'intervalle séparant deux produits ou deux rangées de produits. Le segment $FA_1$ correspond au temps d'attente avant le prochain cycle de fonctionnement de l'organe d'alignement. Pendant cet intervalle de temps, habituellement relativement court, l'organe d'alignement est au repos. Lorsque le dispositif d'alignement fonctionne conformément aux cycles A à F et $A_1$ à $F_1$ représentés par la fig. 1, il part d'une position d'arrêt pour revenir à sa position initiale après une phase active d'alignement des produits effectuée en partie à vitesse constante et après un retour également effectué à vitesse constante. Dans la pratique, les rangées peuvent se succéder de façon aléatoire. Il faut en principe que l'organe d'alignement puisse être activé au moment où le détecteur détecte le passage de la queue d'une rangée dont on veut réaligner les produits, c'est-à-dire que la rangée à réaligner ne se présente pas "trop tôt", à savoir à un moment où l'organe d'alignement n'a pas encore accompli son trajet de retour. Ce trajet de retour de l'organe d'alignement doit pouvoir s'effectuer avant l'arrivée de la rangée suivante.

Toutefois, ce mode opératoire pourrait être quelque peu modifié grâce à l'adjonction d'une mémoire susceptible d'enregistrer le signal de détection du passage de la queue d'une rangée, si cette détection a lieu avant le retour de l'organe d'alignement, et d'un circuit de commande susceptible decommander l'organe d'alignement pour qu'il rattrape la rangée de produits dans un délai suffisamment court pour que le réalignement puisse encore être effectué sur le tronçon du transporteur prévu à cet effet.

La fig. 2 illustre un second mode de fonctionnement d'un dispositif ne comprenant qu'un seul organe d'alignement comme dans l'exemple de réalisation correspondant à la fig. 1. Dans ce cas, l'organe d'alignement partant à l'instant zéro de sa position initiale figurée par le point A est accéléré jusqu'au point B. La phase active de poussée des produits sur le ruban transporteur s'effectue comme précédemment sur le tronçon BC à une vitesse constante supérieure à celle du ruban transporteur représentée par la droite Δ. Sur le tronçon CD l'organe d'alignement est accéléré et déplacé à une vitesse constante sur le tronçon DE, correspondant à une première phase de la trajectoire de retour de l'organe d'alignement. Le tronçon EF correspond à la deuxième phase de retour de cet organe d'alignement. Au point F, cet organe d'alignement entre à nouveau en contact avec les produits et démarre un nouveau cycle d'alignement FB' etc. L'organe d'alignement ne passe plus par une phase d'arrêt et d'attente entre deux cycles d'alignement comme dans le cas correspondant au mode de fonctionnement représenté par la fig. 1.

Une variante de réalisation pourrait être obtenue en modifiant en partie ou en totalité la trajectoire CDEF. Il serait possible de déplacer l'organe d'alignement à une vitesse variable entre les points D et F en supprimant la phase de déplacement à vitesse constante sur le tronçon DE.

L'avantage de cette réalisation est que le moteur est moins sollicité du fait que l'organe d'alignement ne passe plus par un point d'arrêt et d'attente. En revanche, la régulation de la vitesse est plus complexe.

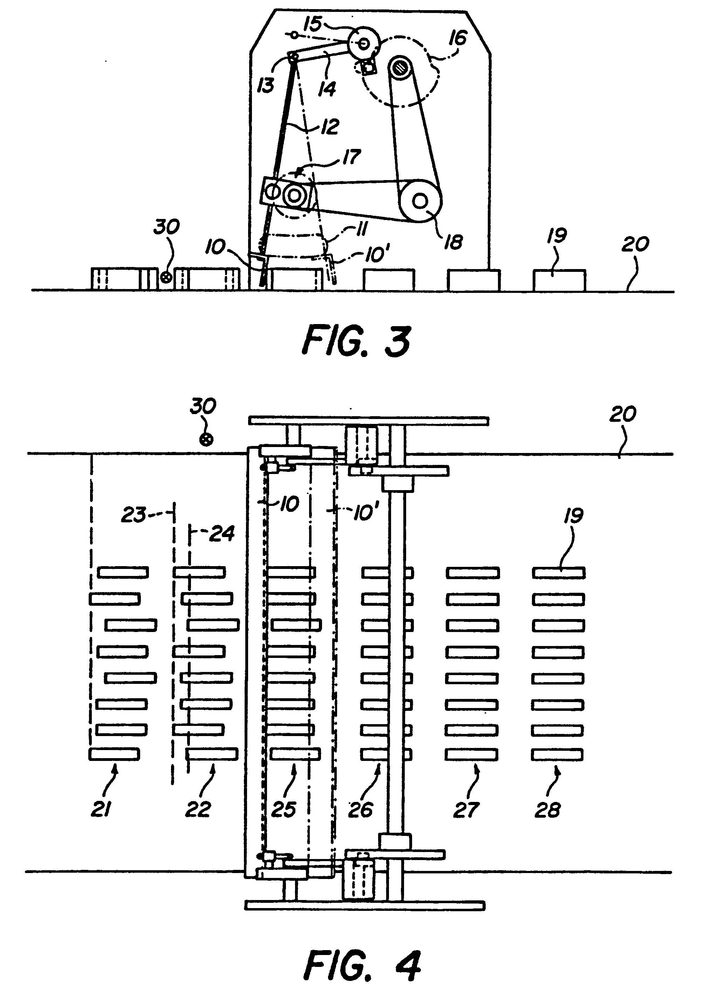

En référence aux fig. 3 et 4, le dispositif représenté est conçu pour fonctionner selon un mode correspondant aux graphiques des fig. 1 et 2. Il comporte un organe d'alignement unique 10 représenté dans différentes positions et destiné à suivre une trajectoire représentée par la courbe fermée 11. Cet organe d'alignement est fixé à l'extrémité d'un bras articulé en 13 à l'extrémité d'un coude 14 portant un galet 15 appuyé sur le contour d'une came rotative 16. Un dispositif du type bielle-manivelle 17 coopère avec le couple d'éléments came 16 et galet suiveur 15 pour entraîner l'organe d'alignement 10 selon la trajectoire 11. Un moteur d'entraînement unique 18 est couplé à la fois à la came 16 et au mécanisme du type bielle-manivelle 17. Ce mécanisme extrêmement léger et ayant par conséquent une inertie faible est particulièrement bien adapté pour permettre le réalignement de produits ou de rangées de produits 19 à des cadences très élevées.

Comme le montre plus particulièrement la fig. 4, les produits arrivent sur le tapis transporteur 20 sous la forme d'une rangée 21 dans laquelle les produits individuels sont désalignés les uns par rapport aux autres. Le but de l'opération d'alignement est de ramener les produits les plus reculés, par exemple ceux de la rangée 22 qui sont en appui contre la ligne fictive 23 en alignement par rapport aux produits les plus avancés de cette même rangée, c'est-à-dire ceux qui sont en appui contre la ligne fictive 24. Cet alignement se fait grâce à l'organe d'alignement 10 qui a pour fonction de pousser les produits les plus reculés qui définissent la queue de la rangée en alignement avec l'extrémité arrière des produits les plus avancés. Dans la pratique la manoeuvre peut se décomposer en deux phases : une première phase au cours de laquelle les produits les plus reculés rattrapent les produits les plus avancés et une deuxième phase au cours de laquelle l'ensemble des produits est poussé à une vitesse supérieure à celle du ruban transporteur pour amener toute la rangée au pas par rapport à la rangée précédente. Sur la fig. 4, la rangée 25 est en train d'être prise en charge par l'organe d'alignement 10. La ligne 10' définit la position de l'organe d'alignement lorsque la phase d'alignement est terminée, ce qui correspond au point C des graphiques des fig. 1 et 2. Les lignes suivantes 26, 27 et 28 illustrent des rangées alignées et mises au pas.

Lors d'un fonctionnement effectué selon les modes décrits en référence aux fig. 1 et 2, le dispositif comporte un détecteur 30, par exemple une cellule photoélectrique dont le rôle est de détecter la queue des produits.

Cette construction correspond au mode d'utilisation des fig. 1 et 2.

La présente invention n'est pas limitée aux formes de réalisation décrites mais pourrait subir différentes modifications et se présenter sous diverses variantes évidentes pour l'homme de l'art. En particulier, le mécanisme d'entraînement de l'organe d'alignement pourrait être remplacé par tout autre mécanisme approprié. Il convient toutefois de prévoir un mécanisme qui puisse s'adapter aux cadences très rapides de transport des produits sur le ruban transporteur, ce qui implique la construction d'un mécanisme léger à faible inertie.

## Revendications

1. Dispositif pour aligner des produits (19) ou des rangées de produits (21-28) amenés irrégulièrement sur un ruban transporteur (20) d'une ligne de conditionnement ou similaire, ce dispositif comportant des moyens de détection (30) pour détecter le passage de la queue d'un produit ou d'une rangée de produits, des moyens d'alignement (10) et des moyens d'actionnement (12-18) de ces moyens d'alignement, dans lequel lesdits moyens de détection sont agencés pour transmettre auxdits moyens d'actionnement un signal de détection lorsqu'ils détectent le passage de la queue du produit ou de la rangée de produits, et dans lequel lesdits moyens d'actionnement sont agencés pour déplacer les moyens d'alignement d'une position d'attente située en dehors de la trajectoire suivie par le produit ou la rangée de produits sur le ruban transporteur, dans une position active en appui contre la queue du produit ou de la rangée de produits, puis pour déplacer les moyens d'alignement dans la direction du ruban transporteur à une vitesse constante supérieure à celle de ce ruban, de manière à pousser le produit ou la rangée de produits déposés sur ce ruban sur une distance déterminée, puis pour ramener les moyens de déplacement dans leur position initiale d'attente, caractérisé en ce que les moyens de détection sont constitués par un détecteur unique (30) et les moyens d'alignement par un organe d'alignement unique (10) et en ce que le retour à la position initiale de cet organe d'alignement est effectué à une vitesse sensiblement constante sur au moins la première partie de sa trajectoire.

2. Dispositif selon la revendication 1, caractérisé en ce que le retour de l'organe d'alignement à la position initiale est effectué, sur la seconde partie de sa trajectoire, à une vitesse variable.

3. Dispositif selon la revendication 2, caractérisé en ce que la vitesse variable est déterminée de telle manière que l'organe d'alignement passe par une position où sa vitesse est nulle entre deux cycles de travail.

4. Dispositif selon la revendication 2, caractérisé en ce que la vitesse variable est déterminée de telle manière que l'organe d'alignement ne passe pas par un point d'arrêt entre deux cycles de travail.

5. Dispositif selon la revendication 3, caractérisé en ce que les moyens d'actionnement sont agencés pour déplacer l'organe d'alignement selon le cycle de fonctionnement suivant : une première phase d'accélération au cours de laquelle l'organe d'alignement est déplacé de sa position d'attente à vitesse nulle dans une position de contact avec la queue du produit ou de la rangée de produits, sa vitesse étant supérieure à la vitesse de transport linéaire du produit ou de la rangée de produits sur le ruban transporteur, une deuxième phase à vitesse constante, où l'organe d'alignement est déplacé parallèlement au ruban transporteur, à une vitesse supérieure à celle de ce ruban et où cet organe reste en appui contre la queue du produit ou de la rangée de produits en le poussant par rapport au ruban transporteur, une troisième phase d'accélération, dans laquelle l'organe d'alignement est soulevé pour ne plus être en contact avec le produit ou la rangée de produits, une quatrième phase de déplacement à vitesse constante au cours de laquelle l'organe d'alignement est déplacé, sur une partie de sa trajectoire, à vitesse constante, dans une direction opposée à la direction de déplacement du ruban transporteur, et une cinquième phase de décélération, au cours de laquelle l'organe d'alignement est ramené à une vitesse décroissant jusqu'à zéro, dans sa position d'attente.

6. Dispositif selon la revendication 4, caractérisé en ce que les moyens d'actionnement sont agencés pour déplacer l'organe d'alignement selon le cycle de fonctionnement suivant : une première phase d'accélération au cours de laquelle l'organe d'alignement est déplacé de sa position d'attente à vitesse nulle dans une position de contact avec la queue du produit ou de la rangée de produits, sa vitesse étant supérieure à la vitesse de transport linéaire du produit ou de la rangée de produits sur le ruban transporteur, une deuxième phase à vitesse constante, où l'organe d'alignement est déplacé parallèlement au ruban transporteur, à une vitesse supérieure à celle de ce ruban et où cet organe reste en appui contre la queue du produit ou de la rangée de produits en le poussant par rapport au ruban transporteur, une troisième phase d'accélération, dans laquelle l'organe d'alignement est soulevé pour ne plus être en contact avec le produit ou la rangée de produits, une quatrième phase de déplacement à vitesse constante au cours de laquelle l'organe d'alignement est déplacé, sur une partie de sa trajectoire, à vitesse constante, dans une direction opposée à la direction de déplacement du ruban transporteur, et une cinquième phase de décélération, au cours de laquelle l'organe d'alignement est ramené à une vitesse décroissant jusqu'à la valeur de la vitesse constante de la deuxième phase, dans sa position du début de ladite deuxième phase.

**Patentansprüche**

1. Vorrichtung zum Ausrichten von Produkten (10) oder von Reihen von Produkten (21-28), die auf einem Förderband eines Verpackungsstrangs oder ähnlichem unregelmäßig gebracht werden, wobei diese Vorrichtung mit Erfassungseinrichtungen (30), um das Vorbeilaufen des Endteils eines Produkts oder einer Reihe von Produkten zu erfassen, Einrichtungen für das Ausrichten (10) und Einrichtungen für die Betätigung (12-18) dieser Einrichtungen für das Ausrichten versehen ist, wobei die Erfassungseinrichtungen ausgelegt sind, um den Einrichtungen für die Betätigung ein Signal zu übertragen, wenn sie das Vorbeilaufen des Endteils eines Produkts oder einer Reihe von Produkten erfassen und die Einrichtungen für die Betätigung dafür ausgelegt sind, die Einrichtungen für das Ausrichten von einer Wartestellung, die außerhalb der Richtung der Beförderung des Produktes oder der Reihe von Produkten auf dem Förderband liegt, in eine Arbeitsstellung in Berührung mit dem Endteil des Produkts oder der Reihe von Produkten zu versetzen, dann die Einrichtungen für das Ausrichten in die Richtung des Förderbands mit einer konstanten Geschwindigkeit, die höher als die Geschwindigkeit des Förderbandes liegt, zu verstellen, um das Produkt oder die Reihe von Produkten, die auf dem Förderband abgelegt sind, über eine bestimmte Entfernung zu schieben, dann die Einrichtungen für das Ausrichten in ihre ursprüngliche Wartestellung zurückzuführen, **dadurch gekennzeichnet**, daß die Erfassungseinrichtungen aus einer einzigen Erfassungseinrichtung (30) und die Einrichtungen für das Ausrichten aus einem einzigen Organ für das Ausrichten (10) bestehen und daß die Rückführung in die ursprüngliche Stellung dieses Organs für das Ausrichten auf mindestens den ersten Teil seines Verstellweges bei einer im wesentlichen konstanten Geschwindigkeit erfolgt.

2. Vorrichtung gemäß Anspruch 1, **dadurch gekennzeichnet**, daß die Rückführung des Organs für das Ausrichten in die ursprüngliche Stellung auf dem zweiten Teil seines Verstellweges bei einer veränderlichen Geschwindigkeit erfolgt.

3. Vorrichtung gemäß Anspruch 2, **dadurch gekennzeichnet**, daß die veränderliche Geschwindigkeit derart festgelegt ist, daß das Organ für das Ausrichten über eine Stellung geht, in der zwischen zwei Arbeitsphasen ihre Geschwindigkeit gleich null ist.

4. Vorrichtung gemäß Anspruch 2, **dadurch gekennzeichnet**, daß die veränderliche Geschwindigkeit derart festgelegt ist, daß das Organ für das Ausrichten nicht über einen Haltepunkt zwischen zwei Arbeitsphasen geht.

5. Vorrichtung gemäß Anspruch 3, **dadurch gekennzeichnet**, daß die Einrichtungen für die Betätigung eingerichtet sind, um das Organ für das Ausrichten gemäß dem folgenden Arbeitsablauf zu verstellen : eine erste Phase der Beschleunigung, bei der das Organ für das Ausrichten von seiner Wartestellung mit einer Geschwindigkeit gleich null in einer Stellung der Berührung mit dem Endteil des Produkts oder der Reihe von Produkten verstellt wird, wobei seine Geschwindigkeit höher als die lineare Geschwindigkeit der Beförderung des Produkts oder der Reihe von Produkten auf dem Förderband liegt ; eine zweite Phase bei konstanter Geschwindigkeit, bei der das Organ für das Ausrichten bei einer höheren Geschwindigkeit als die Geschwindigkeit des Förderbands parallel zu dem Förderband verstellt wird und das Organ für das Ausrichten mit dem Endteil des Produktes oder der Reihe von Produkten in Berührung bleibt, wobei dieses Endteil im Verhältnis zu dem Förderband geschoben wird ; eine dritte Phase der Beschleunigung, bei der das Organ für das Ausrichten angehoben wird, um mit dem Produkt oder mit der Reihe von Produkten nicht mehr in Berührung zu stehen ; eine vierte Phase der Verstellung bei konstanter Geschwindigkeit, bei der das Organ für das Ausrichten auf einem Teil seines Verstellwegs bei konstanter Geschwindigkeit in eine Richtung, die der Transportrichtung des Förderbands entgegengesetzt ist, verstellt wird ; eine fünfte Phase der Verzögerung, bei der das Organ für das Ausrichten mit einer Geschwindigkeit, die bis zu null abnimmt, in seine Wartestellung zurückgeführt wird.

6. Vorrichtung gemäß Anspruch 4, **dadurch gekennzeichnet**, daß die Einrichtungen für die Betätigung eingerichtet sind, um das Organ für das Ausrichten gemäß dem folgenden Arbeitsablauf zu verstellen : eine erste Phase der Beschleunigung, bei der das Organ für das Ausrichten von seiner Wartestellung mit einer Geschwindigkeit gleich null in einer Stellung der Berührung mit dem Endteil des Produkts oder der Reihe von Produkten verstellt wird, wobei seine Geschwindigkeit höher als die lineare Geschwindigkeit der Beförderung des Produkts oder der Reihe von Produkten auf dem Förderband liegt ; eine zweite Phase bei konstanter Geschwindigkeit, bei der das Organ für das Ausrichten bei einer höheren Geschwindigkeit als die Geschwindigkeit des Förderbands parallel zu dem Förderband verstellt wird und das Organ für das Ausrichten mit dem Endteil des Produktes oder der Reihe von Produkten in Berührung bleibt, wobei dieses Endteil im Verhältnis zu dem Förderband geschoben wird ; eine dritte Phase der Beschleunigung, bei der das Organ für das Ausrichten angehoben wird, um mit dem Produkt oder mit der Reihe von Produkten nicht mehr in Berührung zu stehen ; eine vierte Phase der Verstellung bei konstanter Geschwindigkeit, bei der das Organ für das Ausrichten auf einem Teil seines Verstellwegs bei konstanter Geschwindigkeit in eine Richtung, die der Transportrichtung des Förderbands entgegengesetzt ist, verstellt wird ; eine fünfte Phase der Verzögerung, bei der das Organ für das Ausrichten mit einer Geschwindigkeit, die bis zu dem Wert der konstanten Geschwindigkeit der zweiten Phase abnimmt, in seiner Stellung am Anfang der besagten zweiten Phase zurückgeführt wird.

**Claims**

1. Apparatus for aligning products (10) or rows of products (21-28) positioned irregularly on a conveyor along a predetermined path downstream of a conditioning line or the like, comprising a detection means (30) to detect the passage of the trailing product or row of products, an alignment means (10) and a respective activation means (12-18) for this alignment means in which said detection means is adapted to transmit to said activation means a detection signal upon detecting the passage of said trailing product or row of products, and in which said activation means is adapted to displace said alignment means from an initial rest position beyond said predetermined path of said product or row of products on said conveyor, to an active position abutting against said trailing product or row of products, said activation means adapted to then displace said alignment means in the direction of movement of said conveyor at a substantially constant velocity greater than that of said conveyor, in a manner so as to push said product or row of products positioned on said conveyor over a predetermined distance, and then to return said alignment means to said initial rest position characterized in that the detection means is constituted by a single detector (30) and the alignment means by a single alignment element and in that the return to said initial rest position of said single alignment element (10) is performed at a velocity which is substantially constant over at least the first portion of its movement.

2. Apparatus according to claim 1, characterized in that the return to said initial rest position of the alignment element is performed at a variable velocity on the second portion of its movement.

3. Apparatus according to claim 2, characterized in that the variable velocity is determined in such a manner that the alignment element passes through a position where its velocity is zero between operation cycles.

4. Apparatus according to claim 2, characterized in that the variable velocity is determined in such a manner that the alignment element does not pass through a stopping point.

5. Apparatus according to claim 3, characterized in that activation means is adapted to displace said single alignment element according to the following operation cycle : a first acceleration phase during which said single alignment element is displaced from said initial rest position at zero velocity to an abutting position with said trailing product or row of products, its velocity being greater than the velocity of said product or row of products on said conveyor ; a second phase of substantially constant velocity whereby said single alignment abuts against said trailing product or row of products while pushing same relative to said conveyor ; a third acceleration phase whereby said single alignment element is raised to no longer be in contact with said product or row of products ; a fourth displacement phase of substantially constant velocity during which said single alignment element is displaced, over a portion of its path, in a direction substantially opposite to the direction of displacement of said conveyor ; and a fifth deceleration phase during which said single alignment element is returned at a decreasing velocity to its initial rest position at zero velocity.

6. Apparatus according to claim 4, characterized in that said single activation means is adapted to displace said single alignment element according to the following operation cycle : a first acceleration phase during which said single alignment element is displaced from said initial rest position at zero velocity into an abutment position with the trailing product or row of products, its velocity being greater than the velocity of said product or row of products on said conveyor ; a second phase of substantially constant velocity, whereby said single alignment element is displaced substantially parallel to said conveyor at a velocity greater than that of said conveyor whereby said single alignment element abuts against said trailing product or row of products while pushing same relative to said conveyor ; a third acceleration phase, whereby said single alignment element is raised to no longer be in contact with said product or row of products ; a fourth displacement phase of substantially constant velocity during which said single alignment element is displaced, over a portion of its path, in a direction opposite to the direction of displacement of said conveyor ; and a fifth deceleration phase, during which said single alignment element is returned at a decreasing velocity until the value of substantially constant velocity of said second phase is reached in the starting position of said second phase.

FIG. 1

FIG. 2

FIG. 3

FIG. 4